# EUROPEAN PATENT SPECIFICATION

(11) **EP 1 196 895 B1**
(45) Date of publication and mention of the grant of the patent: **12.04.2006**
(21) Application number: 00946551.9
(22) Date of filing: 13.07.2000
(51) Int. Cl.: G07C 9/00, G08B 13/24

(54) **DETECTION SYSTEM WITH VIDEO CAMERA**
DETEKTIERUNGSSYSTEM MIT VIDEOKAMERA
SYSTEME DE DETECTION AVEC CAMERA VIDEO

(30) Priority: 13.07.1999 NL 1012592
(43) Date of publication of application: 17.04.2002
(73) Proprietor: DUTCH A & A TRADING B.V., NL-3840 AT Harderwijk (NL)
(72) Inventor: DE NOOD, Cornelis, Simon, Adriaan, NL-3841 BD Harderwijk (NL); ANGEL, Willem, NL-8034 RB Zwolle (NL)
(74) Representative: van Westenbrugge, Andries
(86) International application number: PCT/NL2000/000495
(87) International publication number: WO 2001/004844

(56) References cited:
- EP-A- 0 921 505
- WO-A-93/09621
- WO-A-98/11520
- US-A- 5 541 585

## Description

The invention relates to a detection system comprising at least a receiver, a detector and an element that can be brought into one or more predetermined states, the receiver reacting to the states of the element when the latter is brought into the vicinity of the receiver and controlling the detector to emit a detection signal that is associated with the state of the element.

A detection system of this type is used in current identification systems, electronic badges or cards, which are in, or can be brought into, a predetermined state, being widely used as the element. In this predetermined state an identification number has been incorporated in the badge or the card, the identification number being read when the badge or the card is brought into the vicinity of the receiver and the detector determining whether the identification number is a valid identification number. If this number is valid the detector emits a detection signal, by means of which access is granted to the person submitting or wearing the card.

The detection system can also be used in an anti-theft system, in which case, depending on the construction, the detection system can consist of a single antenna for wall or floor mounting or of several antennas which are positioned on either side of a passageway. In this case also the element can be a tag or card which has been affixed to the article to be provided with security. If payment has been made for the article the tag is brought into a state, the receiver (receiver antenna) reacting to said state. The detector is controlled by the receiver to emit an alarm or no alarm, depending on the state of the tag (paid for or not).

The aim of the invention is to provide a detection system of a type mentioned in the preamble with which even better security is possible.

Said aim is achieved according to the invention in that a video camera focused on the surroundings of the receiver is present for recording the wearer wearing the element and a memory device is fitted for storing the images recorded by the video camera.

The invention is based on the insight that by storing the identity of the person wearing the element or submitting the element an additional check for security purposes is possible. In situations where a substantial degree of security is useful or where this link between wearer and element is desirable, simultaneous recording of the state of the element, or the information thereon, in relation to the identity of the wearer or the person submitting the element can take place by means of the invention.

From WO 98/11520 A1 a security system is known which comprises an interrogator 42 suitable for use with a security tag. The interrogator includes a receiver 50 connected to the input of the data processing and control circuitry (54) for processing and controlling the captured information on the security tag. This known system further includes a video camera (58) for capturing an image of a predetermined zone and a video recorder for storing the video signal on a memory such as a videotape. The video recorder is either a continuous or event-oriented record of activity in the detection zone.

The problem is that because recognisable image information can only be obtained from images which show the person to be captured from a specific view point and the image material that is stored during identification of a tag or card is often not usable. It must be possible to have available images recorded earlier than images recorded at the point in time when the tag is detected.

The aim of the invention is further to provide a detection system in which said problem is removed.

Said aim is achieved according to the invention in that the memory device comprises a temporary memory section for temporary continuous storage of the captured video images for a predetermined period and a permanent memory section for permanent storage of the temporarily stored video images. The memory sections are connected to each other by a transfer channel controlled by the detection signal.

For example, continuous video images of all goods, vehicles, animals or people passing the receiver can be stored in the memory means. This visual identity of the goods, vehicles, animals or people is stored for only a limited period if a predetermined state of the element, badge, tag or card is not also recognised by the detection system. However, if such a state is recognised, recording of this state or information then takes place together with the stored associated video information. As a result of the measure of temporary storage of the video images and conditional permanent storage of the video images a small memory capacity can suffice.

Preferably, the memory device comprises a temporary memory section and a permanent memory section with a transfer channel, controlled by the detection signal, between them. The temporary memory section can comprise a FIFO memory.

Further developments and embodiments of the invention are described in the further dependent claims.

The invention will be explained in more detail below with reference to the drawings. In the drawings:
Fig. 1 shows an embodiment of the detection system according to the invention used with an identification system for access control of persons; and
Fig. 2 shows an embodiment of the detection system according to the invention which, by way of example, is used iri an anti-theft security system.

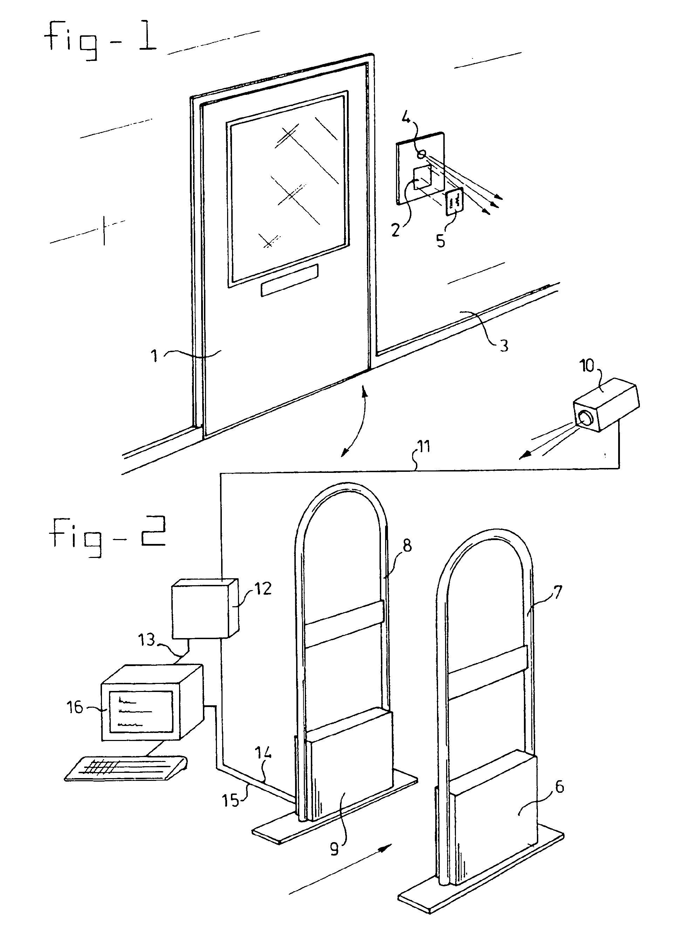

Fig. 1 shows a door 1 that can give access to a secure area. The door 1 can be opened or is opened only when an authorised person wishes to enter the secure area. Authorised persons are given an element in the form of an identity card or badge in order to open the door or to release the opening thereof. This identity card is brought into a state in which an identification number, which may or may not be encoded, has been incorporated on said identity card.

A receiver 2, which is fixed to the wall 3 alongside the door 1, operates in conjunction with the identity badges or cards. A video cell 4 is positioned close to the receiver 2.

When the identity badge or card is brought into the vicinity of the receiver 2 the identification number or other information on the identity badge is read by the receiver, optionally contact-free. At the same time the video cell 4 records video images of the person submitting the identity card 5 and the video images are stored in a memory device, which is not shown in Figure 1. The visual identity of the person is stored for only a limited period and is permanently stored only if an identity badge or card is submitted by a person. It is also possible to store the visual identity of the person permanently only if an identification number of an authorised person is detected. It is now possible to record an identification number or other information together with the associated stored video information. It is then possible to check, even later on, whether the identification number and the image of the person belong to one another and in fact only an authorised person has gained access to the secure area.

Using the detection system it is also possible continuously to store video images, in a video memory device, of all goods, vehicles, animals or other objects which are acting as wearers and which pass the detection system. By this means information on all element wearers in relation to video images of said wearers can be stored.

In Fig. 2 the detection system according to the invention is used in an anti-theft security system. The detection system comprises a transmitter 6 which by means of a transmitter antenna 7 connected thereto generates an alternating magnetic field. The alternating magnetic field is received by the receiver antenna 8 and transmitted to the receiver 9.

In the case of the anti-theft security system elements in the form of anti-theft security tags, which are not shown in the figure, are employed. An anti-theft security tag comprises a carrier or substrate made of insulating plastic material, on which a signal element or a matched circuit has been arranged. The anti-theft security tags are fitted to articles which have to be protected against theft.

If the article has been paid for at the checkout, the anti-theft security tag is brought into a predetermined first state. No alarm will be given when the article is taken outside between the transmitter antenna 7 and the receiver antenna 8. However, if the article has not been paid for the anti-theft security tag will be kept in a second predetermined state (unpaid state). When, in this case, the article that has not been paid for is taken outside between the transmitter antenna 7 and the receiver antenna 8 the receiver 9 will react to this second state and the detector in the receiver, which is not shown separately, will emit a detection signal to control an alarm.

A video camera 10, which is focused on the passageway between the transmitter antenna 7 and receiver antenna 8 has been set up close to the receiver. The support for the video camera can be provided in any known manner and is therefore not indicated. The video camera can also be fixed to the receiver antenna. The video camera 10 records video images of the person who picks up the article and thus the tag or element affixed thereto. The video images are fed via the cable 11 to the memory device 12 and stored therein.

In the embodiment shown the video images are also fed via the cable 13 to the PC 16 in order to display these video images thereon. These video images rendered visible have a preventive action with regard to theft.

The memory device 12 consists of a temporary memory section and a permanent memory section with a transfer channel between them. Since such a configuration can be implemented by any ordinary person skilled in the art, it is not shown in detail. Video images of all goods and/or persons who pass by the detection system are continuously stored in the temporary memory section and this visual identity of the goods and/or persons is stored for only a limited period, that is to say for a relatively short period. When an anti-theft security tag is detected the transfer channel between the temporary memory section and the permanent memory section is activated to transfer the visual identity from the temporary memory section to the permanent memory section and to store it permanently in the latter section. Activation of the transfer channel can also be effected by means of a detection signal, associated with the state of the anti-theft security tag, which represents an article that has not been paid for. The detection signal is fed via the cable 14 to the control for the transfer channel.

The anti-theft security tag can also have been provided with a code which contains specific information, so that recording this code is able to take place together with storage of associated visual identification information. The data read by the receiver can also be fed to the PC via the cable 15.

The temporary memory section can also comprise a sliding register or FIFO memory.

Because recognisable image information can be obtained only from images which show the person submitting or wearing an article from a specific viewpoint, the image material that is stored during identification of the badge, tag or card is often not usable. It must be possible to have available images recorded earlier than images recorded at the point in time when the badge, tag or card is detected. As a result of the continuous storage of the image material for a specific period, image material recorded earlier can be combined and recorded with the detected information on the badge, tag or card. As a result of the use of a temporary memory section and a permanent memory section it is possible for a limited capacity of the overall memory device to suffice.

The detection system can also be provided with a time and/or location indicator which is controlled by the detection signal from the detector in the receiver in order to record the time and/or location relating to the permanently stored video images in the permanent memory section.

In addition to having an anti-theft security function, the element working in conjunction with the receiver can also contain data which are read by means of a reader, for example when scanning the article. With the detection system according to the invention the memory device is in this case equipped such that the data on the element are stored in relation to the permanently stored video images of the article or of the person.

In another embodiment of the invention the element is provided with recognition data on the wearer (article or person) associated with the element. Furthermore, there is a processing device, for example the PC, in the detection system, which is provided with image recognition software for deriving recognition data from the permanently stored video images. Comparison of the derived recognition data with the recognition data read from the element yields information which can lead to even greater security.

## Claims

1. Detection system comprising at least a receiver (2, 9), a detector and an element (5) that can be brought into one or more predetermined states, the receiver reacting to the states of the element when the latter is brought into the vicinity of the receiver and controlling the detector to emit a detection signal that is associated with the state of the element, and further comprising a video camera (4, 10) focused on the surroundings of the receiver (2, 9) for recording the wearer wearing the element and a memory device (12) fitted for storing the images captured by the video camera, **characterised in that** the memory device (12) comprises a temporary memory section and a permanent memory section connected to each other by a transfer channel, which is controlled by the detection signal.

2. Detection system according to claim 1, wherein the element (5) is an activatable tag, **characterised in that** the detection signal is only emitted by an active tag.

3. Detection system according to Claim 1 or 2, **characterised in that** the temporary memory section comprises a FIFO memory.

4. Detection system according to Claim 1-3, **characterised in that** the element (5) is provided with data readable by a reader and that the memory device (12) is equipped for storing the data read from the element (5) and the permanently stored video images in relation to one another.

5. Detection system according to Claim 4, **characterised in that** the element (5) is provided with recognition data on the wearer associated with the element and **in that** a processing device (16) is provided which is provided with image recognition software for deriving recognition data from the permanently stored video images and comparing these with the recognition data read from the element.

## Patentansprüche

1. Erfassungssystem, das wenigstens einen Empfänger (2, 9), einen Detektor und eine Element (5), das in einen oder mehrere vorgegebene Zustände gebracht werden kann, umfasst, wobei der Empfänger auf die Zustände des Elements anspricht, wenn das letztere in die Nähe des Empfängers gebracht wird, und den Detektor in der Weise steuert, dass er ein Erfassungssignal aussendet, das dem Zustand des Elements zugeordnet ist, ferner mit einer Videokamera (4, 10), die auf die Umgebung des Empfängers (2, 9) fokussiert ist, um den das Element tragenden Träger aufzuzeichnen, und mit einer Speichervorrichtung (12), die so beschaffen ist, dass sie die durch die Videokamera aufgenommenen Bilder speichert, **dadurch gekennzeichnet, dass** die Speichervorrichtung (12) einen Abschnitt zum temporären Speichern und einen Abschnitt zum permanenten Speichern, die miteinander durch einen durch das Erfassungssignal gesteuerten Übertragungskanal verbunden sind, umfasst.

2. Erfassungssystem nach Anspruch 1, bei dem das Element (5) ein aktivierbarer Anhänger ist, **dadurch gekennzeichnet, dass** das Erfassungssignal nur durch einen aktiven Anhänger ausgesendet wird.

3. Erfassungssystem nach Anspruch 1 oder 2, **dadurch gekennzeichnet, dass** der Abschnitt zum temporären Speichern einen FIFO-Speicher umfasst.

4. Erfassungssystem nach Anspruch 1-3, **dadurch gekennzeichnet, dass** das Element (5) mit Daten versehen ist, die von einem Leser gelesen werden können, und dass die Speichervorrichtung (12) so beschaffen ist, dass sie die von dem Element (5) gelesenen Daten und die permanent gespeicherten Videobilder in Relation zueinander speichert.

5. Erfassungssystem nach Anspruch 4, **dadurch gekennzeichnet, dass** das Element (5) mit Erkennungsdaten über den dem Element zugeordneten Träger versehen ist und dass eine Verarbeitungsvorrichtung (16) vorgesehen ist, die mit einer Bilderkennungs-Software versehen ist, um aus den permanent gespeicherten Videobildern Erkennungsdaten abzuleiten und um diese Erkennungsdaten mit den von dem Element gelesenen Erkennungsdaten zu vergleichen.

## Revendications

1. Système de détection comprenant au moins un récepteur (2,9), un détecteur et un élément (5) qui peut être amené dans un ou plusieurs états prédéterminés, le récepteur réagissant aux états de l'élément lorsque ce dernier est amené à proximité du récepteur et commandant le détecteur pour émettre un signal de détection qui est associé à l'état de l'élément, et comprenant en outre une camera vidéo (4,10) focalisée sur les environs du récepteur pour enregistrer le porteur portant l'élément et un dispositif de mémoire (12) adapté pour stocker les images capturées par la caméra vidéo, **caractérisé en ce que** le dispositif de mémoire (12) comprend une section de mémoire temporaire et une section de mémoire permanente connectées l'une avec l'autre par un canal de transfert, qui est commandé par le signal de détection.

2. Système de détection selon la revendication 1, dans lequel l'élément (5) est une étiquette activable, **caractérisée en ce que** le signal de détection est uniquement émis par une étiquette active.

3. Système de détection selon la revendication 1 ou 2, **caractérisé en ce que** la section de mémoire temporaire comprend une mémoire FIFO.

4. Système de détection selon la revendication 1 à 3, **caractérisé en ce que** l'élément (5) est pourvu de données lisibles par un lecteur et **en ce que** le dispositif de mémoire (12) est équipé pour stocker les données lues à partir de l'élément (5) et des images vidéo stockées de façon permanente en relation les un/unes avec les autres.

5. Système de détection selon la revendication 4, **caractérisé en ce que** l'élément (5) est pourvu de données de reconnaissance sur le porteur associé à l'élément et **en ce qu'**un dispositif de traitement (16) est fourni, lequel est équipé d'un logiciel de
